# EUROPÄISCHE PATENTSCHRIFT

(11) **EP 3 728 102 B1**
(45) Veröffentlichungstag und Bekanntmachung des Hinweises auf die Patenterteilung: **22.02.2023**
(21) Anmeldenummer: 18766205.1
(22) Anmeldetag: 06.09.2018
(51) Int. Cl.: B67B 3/20, F16C 29/02, F16C 35/063, F16C 35/073, F16C 19/08

(54) **SPINDELWELLENEINHEIT FÜR EINE VORRICHTUNG ZUM DREHVERSCHLIESSEN VON BEHÄLTERN MIT EINEM SCHRAUBVERSCHLUSS**
SPINDLE SHAFT UNIT FOR A DEVICE FOR THE ROTARY CLOSING OF CONTAINERS WITH A SCREW CLOSURE
ENSEMBLE ARBRE DE BROCHE POUR UN DISPOSITIF DE FERMETURE ROTATIVE DE RÉCIPIENTS PAR UNE CAPSULE À VIS

(30) Priorität: 20.12.2017 DE 102017130770
(43) Veröffentlichungstag der Anmeldung: 28.10.2020
(73) Patentinhaber: KHS GmbH, 44143 Dortmund (DE)
(72) Erfinder: SIEMENS, Viktor, 55494 Rheinböllen (DE)
(86) Internationale Anmeldenummer: PCT/EP2018/073919
(87) Internationale Veröffentlichungsnummer: WO 2019/120647

(56) Entgegenhaltungen:
- WO-A1-2010/017800
- CN-A- 101 157 433
- JP-B2- 4 258 893

## Beschreibung

Die Erfindung betrifft eine Spindelwelleneinheit für eine Vorrichtung zum Drehverschließen von Behältern mit einem Schraubverschluss, mit einem Gehäusebauteil und einer an dem Gehäusebauteil drehbar und verschieblich angeordneten Spindelwelle, wobei zwischen dem Gehäusebauteil und der Spindelwelle eine Lagereinheit angeordnet ist. Weiterhin betrifft die Erfindung eine Vorrichtung zum Drehverschließen von Behältern mit einem Schraubverschluss.

Vorrichtungen zum Drehverschließen von Behältern sowie darin verwendete Spindelwelleneinheiten sind in vielfältiger Ausgestaltung aus dem Stand der Technik bekannt. Diese werden in vielfältigen Anwendungsgebieten, insbesondere in der nahrungsmittelverarbeitenden Industrie, verwendet, um einen Schraubverschluss eines Behälters, beispielsweise einer Getränkeflasche, nach der Herstellung oder nach dem Befüllen des Behälters zu verschließen.

So ist beispielsweise aus der Druckschrift DE 100 56 990 A1 bereits eine Vorrichtung zum Verschließen von Flaschen mit Schraubkappen bekannt, die mehrere am Umfang eines um eine vertikale Maschinenachse umlaufenden Rotors gebildete Verschließpositionen aufweist, denen die zu verschließenden Behälter an einem Behältereinlauf übergeben und die verschlossenen Behälter an einem Behälterauslauf entnommen werden. Jede Verschließposition weist dabei einen Behälterträger und eine an einem unteren Ende mit einem Schraubkopf versehene, um eine Behälter- bzw. Spindelachse drehbar gelagerte Schraubspindel auf, die um ihre Spindelachse durch einen Antrieb rotierend antreibbar sind. Dabei ist der Antrieb der Schraubspindeln hinsichtlich des auf die Schraubköpfe übertragenen Drehmomentes und/oder der Drehzahl der Schraubköpfe einstellbar bzw. steuerbar.

Dabei ist zum Verschließen eines Schraubverschlusses sowohl eine Drehbewegung, als auch eine absenkende Hubbewegung notwendig. Bei mechanischen Vorrichtungen zum Drehverschließen wird gewöhnlich ein Verschließerkopf eingesetzt, der an einer Spindelwelle angeordnet ist.

Die Spindelwelle führt beim Verschließen sowohl die notwendige Hubbewegung entlang der Mittellängsachse der Welle, als auch eine Drehbewegung aus.

Um diese Bewegungen zu ermöglichen, sind die Spindelwellen des Standes der Technik typischerweise in wenigstens einem Gleitlager mit einer Lagerbuchse gegenüber einem Gehäusebauteil festgelegt, wobei die Gleitlager häufig als Bronze-Sinterbuchsen gebildet sind. Ganz allgemein kann das Gehäusebauteil selbst ein- oder mehrteilig aufgebaut sein.

Die zeitgleiche Hub- und Drehbewegung der Spindelwelle im Bereich der Lagerbuchse führt jedoch, insbesondere bei einer zeitgleichen Durchführung einer Schaumreinigung von Behältern im Nahrungsmittelbereich, zu einem starken Verschleiß der Lagerbuchse und dadurch zu einem ungenauen Verschließen der Behälter, zu Betriebsausfällen aufgrund von Defekten mit damit einhergehenden hohen Ausfall- und Personalkosten für die Reparatur.

Weiterhin ist aus der Druckschrift WO 2010 / 017 800 A1 bereits eine Antriebseinheit zum rotativen und linearen Bewegen eines Arbeitselements gegenüber einem ersten Gehäuseelement bekannt, wobei die Antriebseinheit einen ersten und einen zweiten Motor umfasst. Weiterhin weist die Antriebseinheit Lagermittel auf, die es bei dem ersten und/oder dem zweiten Motor ermöglichen, dass bei linearer Bewegung des Arbeitselements gegenüber dem ersten Gehäuseelement ein Primärteil und ein Sekundärteil dieses Motors zueinander axial verschiebefest angeordnet sind.

Schließlich zeigt die JP 4 258 893 B2 einen Verschließkopf umfassend einen Kappenhalter, der eine Kappe in festem Kontakt mit seiner Umfangsfläche hält, einen Kolben, der sich in Richtung des Kappenhalters vorschiebt und zurückzieht, sowie eine Druckkammer, die den Kolben durch einen Fluiddruck in Richtung des Kappenhalters drückt. Der Verschließkopf ist so ausgebildet, dass die Kappe, die vom Kappenhalter gehalten wird, auf einen Behälter aufgedreht und befestigt werden kann. Ferner ist eine Feder vorgesehen, die den Kolben mit einer Kraft, die kleiner ist als der in die Druckkammer geleitete Fluiddruck, in Richtung des Kappenhalters drückt, wodurch ein Normalzustand geschaffen wird, in dem der Kappenhalter die Kappe hält.

Der Erfindung liegt daher die Aufgabe zu Grunde, eine Spindelwelleneinheit für eine Vorrichtung zum Drehverschließen von Behältern mit einem Schraubverschluss sowie eine entsprechende Vorrichtung bereitzustellen, die einen besonders langen Betrieb mit einer präzisen Funktion ermöglicht und dabei mit einem besonders geringen Verschleiß betrieben werden kann.

Die Aufgabe wird erfindungsgemäß durch eine Spindelwelleneinheit gemäß Anspruch 1 sowie eine Vorrichtung zum Drehverschließen von Behältern mit einem Schraubverschluss gemäß Anspruch 9 gelöst. Vorteilhafte Weiterbildungen der Erfindung sind in den abhängigen Ansprüchen angegeben.

Die erfindungsgemäße Spindelwelleneinheit für eine Vorrichtung zum Drehverschließen von Behältern mit einem Schraubverschluss weist ein Gehäusebauteil und eine an dem Gehäusebauteil drehbar und verschieblich angeordnete Spindelwelle auf, wobei zwischen dem Gehäusebauteil und der Spindelwelle eine Lagereinheit angeordnet ist, die ein mit der Spindelwelle zusammenwirkendes Gleitlager sowie ein mit dem Gleitlager zusammenwirkendes weiteres Lager umfasst. Die Spindelwelle ist dabei längsverschieblich und unverdrehbar am Gleitlager angeordnet und das Gleitlager ist gegenüber dem Gehäusebauteil verdrehbar und unverschieblich mittels des weiteren Lagers festgelegt.

Dabei wird bei der erfindungsgemäßen Spindelwelleneinheit in vorteilhafter Weise die zugleich ausgeführte Hub- und Rotationsbewegung durch Lagereinheit aufgeteilt, sodass am Gleitlager eine reine Hubbewegung stattfindet und das weitere Lager eine reine Rotation ausführt, wodurch die auftretende Gesamtbelastung in vorteilhafter Weise auf das Gleitlager und das weitere Lager aufgeteilt wird und insbesondere im Gleitlager keine für den Verschleiß maßgebliche Rotation mehr auftritt. Bereits durch diese Aufteilung der auftretenden Kräfte kann eine deutliche Verringerung des Verschleißes und eine deutliche Erhöhung der Lebensdauer sowie der Genauigkeit der ausgeführten Bewegungen erreicht werden. Zudem kann in vorteilhafter Weise das weitere Lager so angeordnet sein, dass im Umfeld der Spindelwelleneinheit verwendete Substanzen, wie beispielsweise Reinigungsschäume oder andere Flüssigkeiten, nur noch mit dem Gleitlager, aber nicht oder nur verringert mit dem weiteren Lager in Kontakt kommen, sodass auch dadurch die Lebensdauer der Lagereinheit noch einmal erhöht werden kann.

Die erfindungsgemäße Vorrichtung zum Drehverschließen von Behältern mit einem Schraubverschluss weist wenigstens ein, bevorzugt mehrere erfindungsgemäße Spindelwelleneinheiten auf, wobei besonders bevorzugt die mehreren Spindelwelleneinheiten über das jeweilige Gehäusebauteil an einem rotierenden Karussell angeordnet sind, wobei die Anordnung am Karussell ganz besonders bevorzugt über das Gehäusebauteil erfolgt. Ebenfalls bevorzugt sind alle Spindelwelleneinheiten in gleichem Abstand zueinander am Karussell angeordnet. Die erfindungsgemäße Vorrichtung ist insbesondere bevorzugt ein Schraubkappenverschließer für Behälter, insbesondere Getränkeflaschen.

Unter einer Spindelwelleneinheit für eine Vorrichtung zum Drehverschließen von Behältern wird grundsätzlich jede Baueinheit verstanden, die eine rotierbare sowie entlang ihrer Mittellängsachse verschiebliche Welle aufweist und die geeignet ist, zum Verschließen eines Schraubverschlusses, insbesondere mittels eines an der Welle angeordneten Verschließerkopfes, verwendet zu werden.

Bei dem Behälter kann es sich zunächst grundsätzlich um einen beliebigen Gegenstand handeln, der mittels eines Schraubverschlusses verschließbar ist, wobei der Behälter ein mittels des Schraubverschlusses mittelbar oder unmittelbar verschließbares Innenvolumen aufweist. Dabei kann der Behälter grundsätzlich aus einem beliebigen Material oder einer beliebigen Kombination mehrerer Materialien sein. Beispielsweise kann der Behälter eine Flasche, eine Dose, ein Kanister, eine Tube, eine Box, ein Beutel, eine Verbundkartonbox, ein Glas, ein Fass oder dergleichen sein. Besonders bevorzugt ist der Behälter zur Aufbewahrung von Nahrungsmitteln vorgesehen und/oder weist einen einzigen Schraubverschluss auf.

Ganz besonders bevorzugt ist der Behälter eine Flasche aus Glas oder Kunststoff, insbesondere PE, PP oder PET.

Bei dem Gehäusebauteil handelt es sich grundsätzlich um ein Bauteil oder eine Baugruppe, die die Spindelwelle zumindest abschnittsweise, bevorzugt dabei allseitig umgibt, um die rotierende und eine Hubbewegung ausführenden Spindelwelle von der Umgebung zu trennen. Das Gehäusebauteil kann zunächst aus einem beliebigen Material gebildet sein. Bevorzugt ist das Gehäusebauteil jedoch aus Kunststoff oder Metall gebildet. Eine weitere Funktion des Gehäusebauteils kann sein, die Spindelwelle sowie ggf. daran angeordnete weitere Bauteile an einer Vorrichtung zum Drehverschließen von Behältern mit einem Schraubverschluss festlegen zu können, wobei das Gehäusebauteil besonders bevorzugt verdrehfest und/oder unverschieblich an der Vorrichtung, insbesondere an einem Karussell, festgelegt werden kann. Bevorzugt ist die Spindelwelle an wenigstens einer Seite, insbesondere an einer Seite zur Anordnung eines Verschließerkopfes, aus dem Gehäusebauteil herausragend und/oder herausschiebbar angeordnet. Weiterhin bevorzugt steht auch das der Seite zur Anordnung eines Verschließerkopfes gegenüberliegende Ende der Spindelwelle aus dem Gehäusebauteil herausragend und/oder herausschiebbar sein.

Bei der Spindelwelle handelt es sich grundsätzlich um eine ein- oder mehrstückige Welle aus einem beliebigen Material, die zum Ausführen einer Hub- und Rotationsbewegung gegenüber einem weiteren Bauteil, insbesondere dem Gehäusebauteil, vorgesehen ist. Insbesondere ist die Spindelwelle eine Schleifspindelwelle. Dabei ist die Spindelwelle bevorzugt verschieblich bzw. translatierbar entlang der Mittellängsachse der Spindelwelle angeordnet. Besonders bevorzugt ist die Spindelwelle derart am Gehäusebauteil festgelegt, dass die Spindelwelle ausschließlich eine Hubbewegung entlang der Mittellängsachse ausführen kann sowie um diese Achse rotierbar ist. Dabei kann die Spindelwelle mit Mitteln zur Übertragung einer Rotations- und/oder Hubbewegung verbunden sein oder selber Mittel zum Erzeugen einer Rotations- und/oder Hubbewegung aufweisen.

Bei der Lagereinheit kann es sich zunächst um ein beliebiges Bauteil oder eine beliebige Baugruppe zur verschieblichen und rotierbaren Anordnung der Spindelwelle an dem Gehäusebauteil handeln, wobei die Lagereinheit wenigstens ein Gleitlager sowie wenigstens ein weiteres Lager aufweist. Das Gleitlager wirkt dabei mit der Spindelwelle zusammen und ist bevorzugt dabei unmittelbar an der Spindelwelle angeordnet. Das weitere Lager ist vorgesehen, mit dem Gleitlager zusammenzuwirken und bevorzugt dabei das Gleitlager unmittelbar gegenüber dem Gehäusebauteil festzulegen.

Dabei ist die Spindelwelle derart gegenüber dem Gleitlager festgelegt bzw. innerhalb des Gleitlagers geführt, dass die Spindelwelle in Bezug zum Gleitlager im Wesentlichen nur eine Hubbewegung entlang der Mittellängsachse ausführen kann. Dabei kann das Gleitlager zur Spindelwelle gegebenenfalls noch zusätzlich sehr langsam rotierbar angeordnet sein, die Hauptrotation wird aber vom Rotationslager übernommen. Die Spindelwelle ist somit gegenüber dem Gleitlager quasi rotationsfrei angeordnet bzw. das Gleitlager führt die wesentlichen insbesondere sämtliche Rotationsbewegungen mit der Spindelwelle gemeinsam aus, wobei das Gleitlager im weiteren Lager rotierbar gelagert ist.

Dagegen erlaubt das weitere Lager im Wesentlichen keine Translations- bzw. Hubbewegungen, insbesondere in Richtung der Mittellängsachse der Spindelwelle, sodass eine präzise Führung der Spindelwelle in einer Anordnung eines Gleitlagers in einem Rotationslager erreicht wird, insbesondere wird die Präzision durch den verminderten Dauerlauf-Verschleiß in der Gleitbuchse erreicht. Bei dem weiteren Lager kann es sich grundsätzlich um ein beliebiges Lager handeln, dass geeignet ist, eine Rotationsbewegung auszuführen und dabei eine Translationsbewegung zu verhindern.

Erfindungsgemäß umfasst das Gleitlager eine Gleitbuchse. Nach einer bevorzugten Weiterbildung der erfindungsgemäßen Spindelwelleneinheit ist die Gleitbuchse als eine Gleitlagerbuchse und bevorzugt als eine Bundbuchse gebildet, wodurch eine besonders einfach und kostengünstige, aber zugleich präzise Lagerung der Spindelwelle bezüglich der Hubbewegung erreicht werden kann. Dabei ist die Gleitbuchse bevorzugt aus einem Kunststoff oder einem Kunststoff aufweisenden Verbundwerkstoff gebildet. Alternativ kann die Gleitbuchse auch aus Metall, beispielsweise aus Sinterbronze gebildet sein.

Bevorzugt weist die Gleitbuchse eine zylindrische Form, insbesondere bevorzugt mit einem über die gesamte Länge gleichbleibenden Durchmesser auf. Weiterhin bevorzugt entspricht die Länge der Gleitbuchse in axialer Richtung zwischen dem 0,5- und dem 2-fachen des Radius und besonders bevorzugt entspricht die Länge etwa dem Radius. Ebenfalls bevorzugt ist die Gleitbuchse als Bundbuchse gebildet, die einen rechtwinklig abstehenden Bund aufweist, der sich besonders bevorzugt über den gesamten Umfang der Gleitbuchse erstreckt. Weiterhin bevorzugt ist die Gleitbuchse bzw. die Bundbuchse einstückig gebildet.

Erfindungsgemäß ist an der Gleitbuchse ein Ring mit wenigstens einer Seitenführung zur verdrehfesten Festlegung der Gleitbuchse gegenüber der Spindelwelle festgelegt, wobei die Seitenführung mit einem korrespondierenden Seitenführungselement der Spindelwelle zusammenwirkt. Bei einer vorteilhaften Ausgestaltung der erfindungsgemäßen Spindelwelleneinheit ist die Seitenführung als eine Nut oder eine Nase gebildet und das korrespondierende Seitenführungselement ist korrespondierend als eine Nase oder eine Nut gebildet, wodurch in besonders einfacher Weise eine verdrehfeste Anordnung der Spindelwelle mittels des Rings in der Gleitbuchse erreicht werden kann. Dabei erstreckt sich das Seitenführungselement an der Spindelwelle bevorzugt wenigstens über eine Länge des maximalmöglichen Hubs. Insbesondere weisen Seitenführung des Rings und das Seitenführungselement der Spindelwelle bevorzugt eine korrespondierende Form auf, sodass diese besonders bevorzugt formschlüssig zusammenwirken und dabei besonders bevorzugt eine Translationsbewegung in zwei Raumrichtungen und/oder eine Rotationsbewegung in jegliche Raumrichtung ausschließen. Ganz besonders bevorzugt ist die Spindelwelle aufgrund des Zusammenwirkens der Seitenführung mit dem Seitenführungselement nur in eine Raumrichtung, insbesondere entlang der Mittellängsachse der Spindelwelle, verschieblich. Der Ring ist bevorzugt form-, kraft- und/oder stoffschlüssig an der Gleitbuchse, besonders bevorzugt an einem Bund der als Bundbuchse gebildeten Gleitbuchse festgelegt.

Bei einer weiteren vorteilhaften Ausgestaltung der erfindungsgemäßen Spindelwelleneinheit sind an der Spindelwelle zwei Seitenführungselemente, insbesondere Nasen oder Nuten, an sich gegenüberliegenden Seiten angeordnet und der Ring weist zwei korrespondierende Seitenführungen, insbesondere Nuten oder Nasen, auf, wobei sich die Seitenführungselemente bevorzugt parallel zur Mittellängsachse der Spindelwelle erstrecken, wodurch in besonders einfacher Weise eine noch zuverlässigere Führung bzw. Festlegung des Rings und der Gleitbuchse gegenüber der Spindelwelle gegen Rotationen erreicht wird. Bevorzugt sind dabei die Seitenführungen und die Seitenführungselemente an dem Ring und an der Spindelwelle jeweils um 180° entlang des Umfangs zueinander versetzt angeordnet.

Bei einer weiteren vorteilhaften Ausgestaltung befindet sich die Verdrehsicherung direkt zwischen Bundbuchse und Spindelwelle, wobei an der Buchse nach innen angegossenen Nasen in die an der Spindelwelle eingearbeiteten Nuten eingreifen, wobei die sonstigen Elemente ausgeführt sind, wie vorstehend beschrieben.

Ebenfalls bevorzugt sind die Seitenführung und die Seitenführungselemente als zueinander korrespondierende Nut und Nase gebildet, die besonders bevorzugt einen rechteckigen Querschnitt aufweisen. Besonders bevorzugt weisen die Nut und die Nase jeweils über die gesamte Länge eine gleichbleibende Breite und/oder Höhe bzw. Tiefe auf. Dabei ist die Höhe der Nase bevorzugt jeweils korrespondierend zu der Tiefe der Nut gebildet. Eine Seitenführung ist bevorzugt am Innendurchmesser des Rings und/oder ein Seitenführungselement ist bevorzugt am Außendurchmesser der Spindelwelle angeordnet. Weiterhin bevorzugt sind die Nut und die Nase rechtwinklig zur Mittellängsachse der Spindelwelle bzw. sich radial erstreckend angeordnet. Ebenfalls bevorzugt ist jeweils die Breite der Nase und der Nut gleich. Ganz besonders bevorzugt weisen sämtliche Nuten und Nasen zueinander jeweils eine gleiche Breite, Tiefe und/oder Höhe auf.

Weiterhin erfindungsgemäß ist der Ring aus zwei, die Spindelwelle umgebenden Teilen gebildet, die aneinander festlegbar sind und einen über den gesamten Umfang geschlossenen Ring bilden. Nach einer bevorzugten Ausführung der erfindungsgemäßen Spindelwelleneinheit umgeben die beiden Teile den Ring jeweils zum halben Umfang, wobei beide Teile bevorzugt aneinander formschlüssig und/oder kraftschlüssig festlegbar sind und dabei einen über den gesamten Umfang geschlossenen Ring bilden, wodurch eine besonders einfachere Montage des Rings mit der Seitenführung ermöglicht wird. Alternativ kann die Festlegung der beiden Teile eines Rings auch kraftschlüssig und/oder stoffschlüssig erfolgen. Jeder Teil des Rings weist ganz besonders bevorzugt eine Seitenführung, insbesondere eine Nase oder eine Nut, auf.

Nach einer weiteren bevorzugten Ausführung der erfindungsgemäßen Spindelwelleneinheit ist die Gleitbuchse mittels eines Lagers, insbesondere eines Kugel- oder Wälzlagers, verdrehbar an dem Gehäusebauteil angeordnet, wobei das Kugel- oder Wälzlager mit einem Außenring an dem Gehäusebauteil und mit einem Innenring an der Gleitbuchse anliegt. Generell ist das weitere Lager also als ein Lager gebildet, das für eine Radialbelastung vorgesehen ist. Bei der bevorzugten Ausgestaltung, als Kugel- oder Wälzlager in schmierfreier und nicht rostender Ausführung, umfasst dieses insbesondere Kunststoff- oder Stahlkugeln bzw. Wälzkörper, insbesondere VA-Kugeln oder VA-Wälzkörper, die zwischen Außenring und Innenring angeordnet sind.

Weiterhin ist eine erfindungsgemäße Spindelwelleneinheit bevorzugt, bei der das Gleitlager aus zwei entlang des Verlaufs der Spindelwelle übereinander angeordneten Gleitbuchsen gebildet ist, die besonders bevorzugt miteinander über den Ring verbunden sind. Ganz besonders bevorzugt sind die beiden Gleitbuchsen jeweils mittels eines Lagers, insbesondere eines Kugel- oder Wälzlagers, an dem Gehäusebauteil drehbar angeordnet. Durch eine derartige Ausgestaltung kann in besonders vorteilhafter Weise eine weitere Entlastung der einzelnen Gleitlager und weiteren Lager erreicht werden. Weiterhin bevorzugt sind die beiden Gleitbuchsen jeweils über einen Bund mit dem Ring verdrehfest verbunden, sodass beide Gleitbuchsen und der Ring eine zueinander unverdrehbare Einheit bilden.

Alternativ und ebenfalls sehr vorteilhaft ist es, wenn die Gleitbuchsen mit der Bundseite zu einander ausgerichtet sind und zwischen den Rotationslagern mit dem Bund gehalten oder eingeklemmt sind. Diese Anordnung verhindert auf sehr einfache Weise das Herauswandern der Gleitbuchse aus dem Sitz im Innenring des Rotationslagers.

Bei einer besonders vorteilhaften Weiterbildung der erfindungsgemäßen Spindelwelleneinheit ist das wenigstens ein Lager, insbesondere Kugel- oder Wälzlager, und bevorzugt sind alle Lager bzw. die gesamte Lagereinheit in einer Bohrung des Gehäusebauteils angeordnet, wobei die Bohrung bevorzugt in der Richtung zur Anordnung eines Verschließerkopfes an der Spindelwelle mittels eines Verschlussrings geschlossen ist, sodass das oder die Lager und/oder das oder die Gleitlager in besonders einfacher Weise ausgetauscht werden können. Die Bohrung im Gehäusebauteil ist dabei konzentrisch mit dem Verlauf der Spindelwelle vorgesehen bzw. der Mittelpunkt der Bohrung liegt in der Position der Mittellängsachse der Spindelwelle. Der Verschlussring ist dabei derart gebildet und angeordnet, dass ein fester Sitz des wenigstens einen weiteren Lagers und bevorzugt auch des Gleitlagers erreicht werden kann. Besonders bevorzugt besteht dabei kein direkter Kontakt zwischen dem Verschlussring und der Spindelwelle und/oder dem Gleitlager, insbesondere der Gleitbuchse. Ebenfalls bevorzugt ist der Verschlussring mittels Schrauben an dem Gehäusebauteil festgelegt.

Bei einer bevorzugten Ausführung der erfindungsgemäßen Vorrichtung zum Drehverschließen von Behältern mit einem Schraubverschluss ist an der Spindelwelle und bevorzugt ist an jeder Spindelwelle ein Verschließerkopf zum Fassen und Schließen eines Schraubverschlusses auf einem Behälter angeordnet, der mittels der Spindelwelle rotierbar und in Axialrichtung verschiebbar ist.

Nach einer vorteilhaften Weiterbildung der erfindungsgemäßen Vorrichtung zum Drehverschließen ist an der Spindelwelle, bevorzugt an einer dem Verschließerkopf in Bezug zum Gleitlager bzw. der Spindelwelleneinheit gegenüberliegenden Seite, ein Zahnrad zum Rotationsantrieb der Spindelwelle festgelegt, wobei das Zahnrad bevorzugt zumindest abschnittsweise aus dem Gehäusebauteil herausragt und/oder durch eine Öffnung des Gehäusebauteils zugänglich ist. Dabei umgibt das Zahnrad die Spindelwelle bevorzugt allseitig bzw. über gesamten Umfang. Das Zahnrad ist weiterhin bevorzugt ein geradverzahntes Zahnrad und/oder die Verzahnung verläuft entlang der Mittellängsachse der Spindelwelle. Weiterhin bevorzugt ist das Zahnrad entlang der Mittellängsachse der Spindelwelle länger als die maximalmögliche Verschiebung der Spindelwelle gegenüber dem Gehäusebauteil in dieser Richtung und besonders bevorzugt ist das Zahnrad mindestens 20 % länger. Ganz besonders bevorzugt beträgt die Zahnradlänge zwischen 120 % und 200 % der maximalmöglichen Verschiebung.

Bei einer besonders bevorzugten Weiterbildung der erfindungsgemäßen Vorrichtung zum Drehverschließen ist an der Spindelwelle ein zweites Gleitlager angeordnet, wobei die Spindelwelle weiterhin bevorzugt aus zwei aneinander angeordneten Abschnitten gebildet ist. Der erste Abschnitt ist dabei zur Anordnung an einem Verschließerkopf vorgesehen und wirkt mit dem ersten Gleitlager zusammen. Der zweite Abschnitt wirkt dabei mit dem zweiten Gleitlager zusammen und besonders bevorzugt ist am zweiten Abschnitt eine Spindelwellenführung zur Steuerung des Hubs bzw. der Verschiebung der Spindelwelle angeordnet. Das zweite Gleitlager ist bevorzugt an einer dem Verschließerkopf in Bezug zur Spindelwelleneinheit gegenüberliegenden Seite angeordnet, insbesondere an einer der Spindelwelleneinheit in Bezug zum Zahnrad gegenüberliegenden Seite.

Bei einer vorteilhaften Ausgestaltung der erfindungsgemäßen Vorrichtung zum Drehverschließen sind beide Abschnitte der Spindelwelle durch ein zwischen dem zweiten Gleitlager und dem Zahnrad angeordnetes Spindelwellenlager, das bevorzugt als Kugel- oder Wälzlager gebildet ist, miteinander verbunden, sodass der erste Abschnitt rotierbar und verschieblich ist sowie der zweite Abschnitt von der Rotation des ersten Abschnitts entkoppelt und entsprechend auch nur verschieblich sein kann. Bevorzugt sind beide Abschnitte der Spindelwelle entlang einer gemeinsamen Mittellängsachse angeordnet.

Eine bevorzugte Ausführung der erfindungsgemäßen Vorrichtung zum Drehverschließen sieht vor, dass an dem mit dem zweiten Gleitlager zusammenwirkenden zweiten Abschnitt der Spindelwelle ein Laufrad zum Abrollen auf einer Steuerkurve zur Steuerung des Hubes der Spindelwelle angeordnet ist, wobei das Laufrad bevorzugt Teil der Spindelwellenführung ist, wodurch der Hub der Spindelwelle in besonders einfacher Weise gesteuert werden kann. Dabei ist die Rotationsachse des Laufrades bevorzugt rechtwinklig zur Axialrichtung bzw. zur Hubrichtung der Spindelwelle angeordnet.

Ein Ausführungsbeispiel der erfindungsgemäßen Vorrichtung zum Drehverschließen von Behältern mit einem Schraubverschluss wird nachstehend mit Bezug auf die Zeichnungen näher erläutert. In den Figuren zeigen:

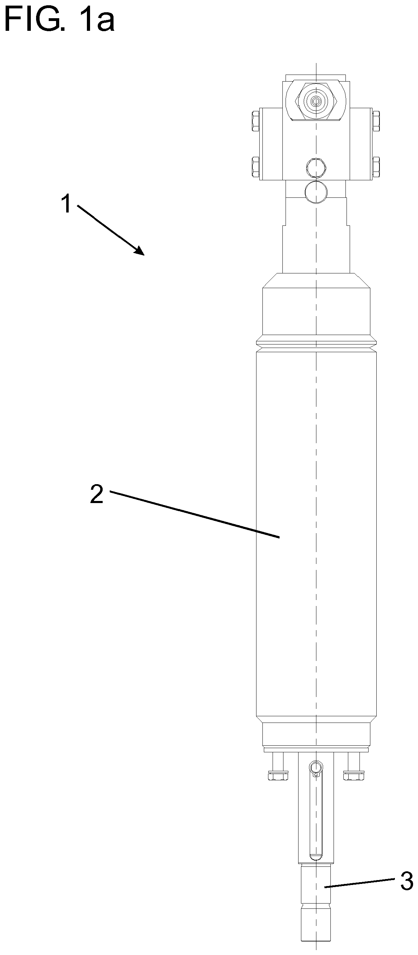

- Fig. 1a: eine Seitenansicht einer Vorrichtung zum Drehverschließen,
- Fig. 1: b eine Schnittzeichnung durch eine Mittellängsachse der in Fig. 1a dargestellten Vorrichtung,
- Fig. 2: eine vergrößerte Schnittansicht einer Spindelwelleneinheit der in Fig. 1 dargestellten Vorrichtung,
- Fig. 3a: eine Schnittansicht entlang der Mittellängsachse der in Fig. 2 dargestellten Spindelwelleneinheit auf Höhe eines zwischen zwei Bundbuchsen angeordneten Rings und
- Fig. 3b: eine Schnittansicht entlang der Mittellängsachse der in Fig. 2 dargestellten Spindelwelleneinheit auf Höhe eines Innen- und Außenrings eines Wälzlagers.

Bei einer in Fig. 1a schematisch dargestellten Vorrichtung 1 zum Drehverschließen von Behältern mit einem Schraubverschluss ist innerhalb eines Gehäuses 2 eine Spindelwelle 3 derart angeordnet, dass ein entlang einer Mittellängsachse verschiebliches sowie um diese Achse rotierbares Ende der Spindelwelle 3 aus dem Gehäuse heraussteht.

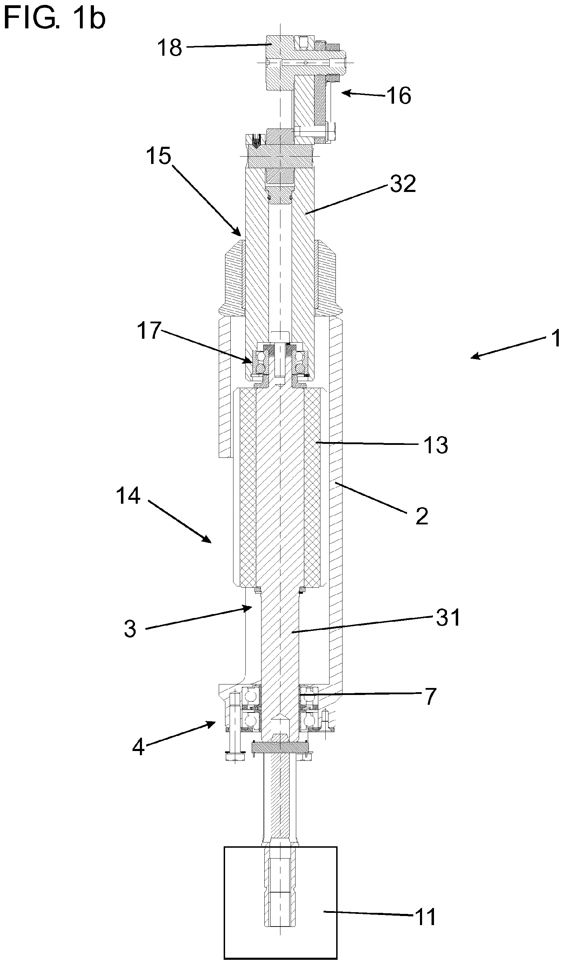

Wie in Fig. 1b dargestellt, ist die Spindelwelle 3 dabei in wenigstens zwei Abschnitte 31, 32 unterteilt, die entlang einer identischen Mittellängsachse gemeinsam am und im Gehäuse 2 angeordnet sind. Die beiden Abschnitte 31, 32 sind miteinander über ein als Wälzlager gebildetes Spindelwellenlager 17 verbunden, sodass beide Abschnitte 31, 32 der Spindelwelle 3 unabhängig voneinander rotierbar sind bzw. der eine Abschnitt 31 rotiert werden kann, während der andere Abschnitt 32 keine Rotation ausführt.

An dem ersten Abschnitt 31 der Spindelwelle 3 ist an einem aus dem Gehäuse 2 herausragenden Ende eine Verschließerkopf 11 anordenbar, um einen Schraubdeckel auf ein Gewinde eines Behälters aufschrauben zu können. An dem gegenüberliegenden Ende in einem Bereich des Spindelwellenlagers ist an dem ersten Abschnitt 31 der Spindelwelle 3 ein entlang der Mittellängsachse gerade verzahntes Zahnrad 13 die Spindelwelle 3 umgebend angeordnet. Dabei erstreckt sich das Zahnrad 13 über eine Länge der Spindelwelle 3, die etwa 120 % einer maximalmöglichen linearen Verschiebung der Spindelwelle 3 gegenüber dem Gehäuse 2 entspricht. Weiterhin weist das Gehäuse 3 im Bereich des Zahnrades 13 eine Öffnung 14 auf, die sich ebenfalls derart über die Länge des Gehäuses 3 erstreckt, dass in jeder möglichen Verschiebungsposition der Spindelwelle 3 wenigstens ein Teil des Zahnrades 13 im Bereich der Öffnung 14 befindet. Somit ist in einfacher Weise ein Rotationsantrieb des ersten Abschnitts 31 der Spindelwelle 3 mittels eines weiteren, mit dem Zahnrad 13 der Spindelwelle 3 zusammenwirkenden Zahnrades oder dergleichen möglich.

Der zweite Abschnitt 32 der Spindelwelle 3 ist an einem Ende über das Spindelwellenlager 17 mit dem ersten Abschnitt 31 verbunden und weist an dem anderen Ende eine Spindelwellenführung 16 zur Steuerung einer linearen Verschiebung der gesamten Spindelwelle 3, 31, 32 auf. Dazu umfasst die Spindelwellenführung 16 ein Laufrad 18, dessen Rotationsachse rechtwinklig zur Mittellängsachse der Spindelwelle 3 ausgerichtet ist. Das Laufrad 18 ist dazu vorgesehen, auf einer Bahnkurve geführt zu werden, sodass der jeweilige Hub der Spindelwelle 3 in einfacher Weise entsprechend dem Verlauf der Bahnkurve gesteuert werden kann.

Der zweite Abschnitt 32 der Spindelwelle 3 ist lediglich dafür vorgesehen, eine Hubbewegung, nicht jedoch eine Rotation auszuführen und ist daher mit dem ersten Abschnitt 31 über das Spindelwellenlager 17 verbunden. Am Gehäuse 2 ist der zweite Abschnitt 32 mittels eines zweiten Gleitlagers 15 festgelegt, das aus einer einzelnen Gleitbuchse aus Kunststoff gebildet ist.

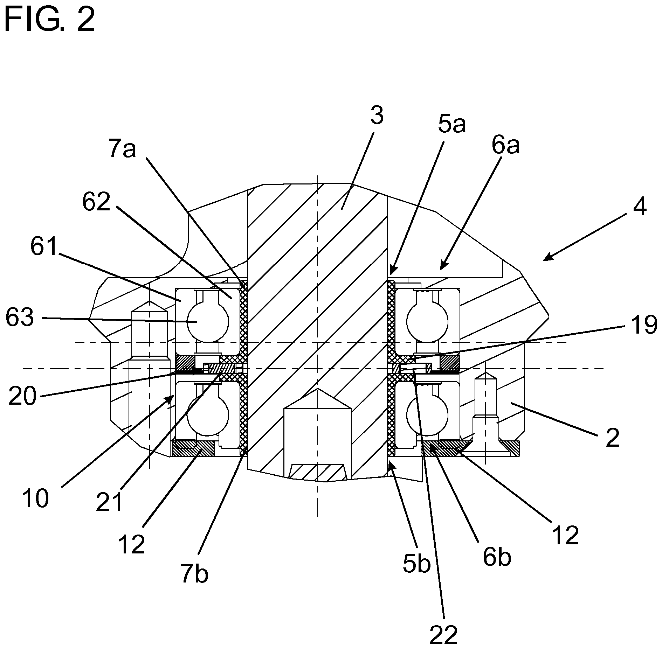

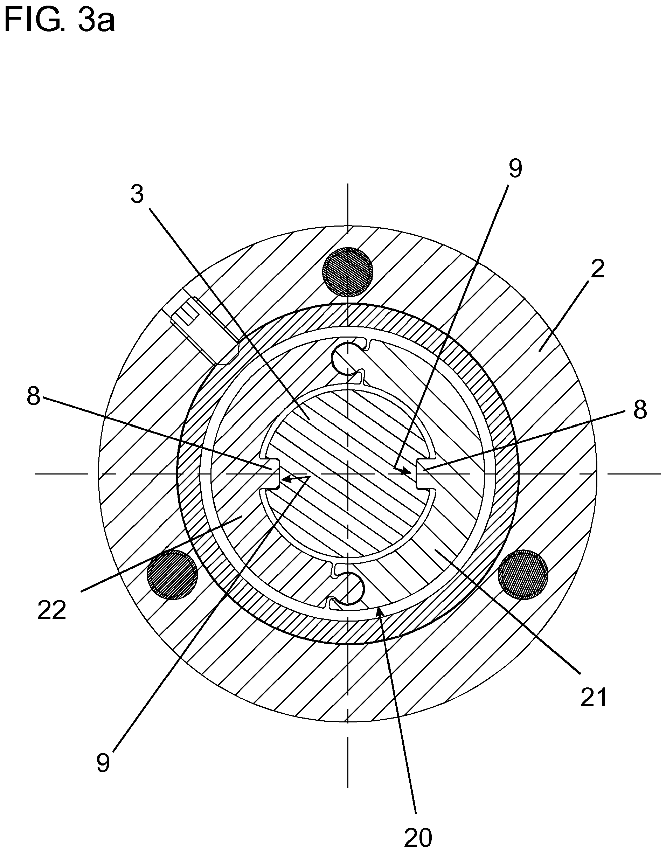

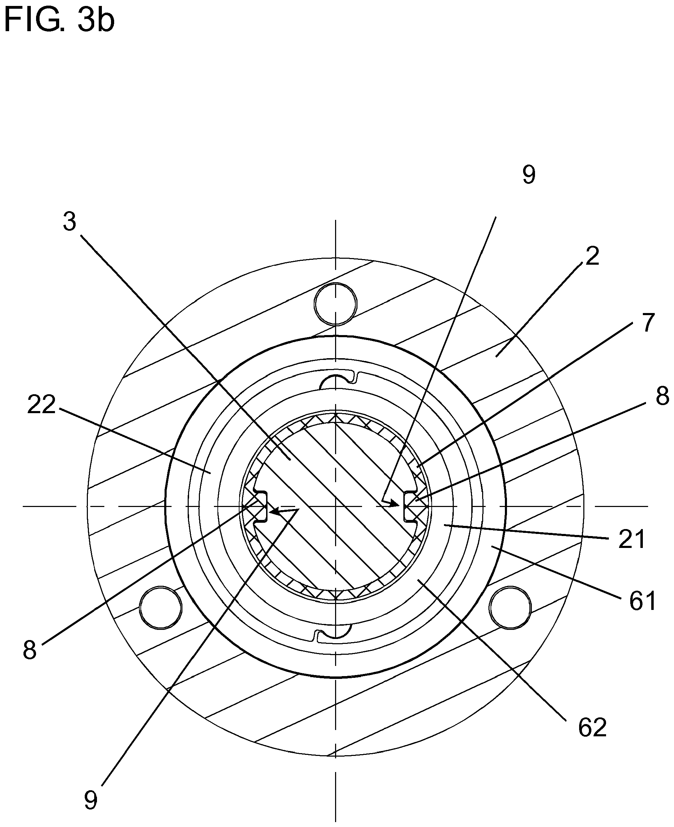

Der erste Abschnitt 31 der Spindelwelle 3 ist verschieblich und rotierbar gegenüber dem Gehäuse 2 mittels einer Lagereinheit 4 festgelegt, die in den Figuren 2 sowie 3a und 3b näher dargestellt ist. Dabei ist die Lagereinheit 4 aus einem Gleitlager 5, 5a, 5b sowie einem weiteren Lager 6, 6a, 6b gebildet.

Das Gleitlager 5 ist aus zwei entlang der Spindelwelle 3 übereinander angeordneten Bundbuchsen 7a, 7b aus Kunststoff gebildet, wobei die Spindelwelle 3, insbesondere der erste Abschnitt 31, unmittelbar gleitend durch das Gleitlager 5 geführt wird. Dabei erfolgt lediglich eine lineare Verschiebung der Spindelwelle 3 gegenüber dem Gleitlager 5. Um eine Rotation des Gleitlagers 5 und insbesondere der beiden Bundbuchsen 7a, 7b gegenüber der Spindelwelle 3 zu verhindern, sind beide Bundbuchsen 7a, 7b jeweils über den auf die andere der beiden Bundbuchsen 7b, 7a zugewandten Bund 19 verdrehfest mit einem zwischen den beiden Bundbuchsen 7a, 7b angeordneten Ring 20 verbunden.

Der zwischen den beiden Bundbuchsen 7a, 7b angeordneten Ring 20 weist dabei zwei rechteckige, an sich gegenüberliegenden Seiten des Ringinneren angeordnete Nasen 8 auf, die in zugehörigen Nuten 9 in der Oberfläche der Spindelwelle 3 derart angeordnet sind, dass der Ring 20 zwar entlang der Mittellängsachse der Spindelwelle 3 verschieblich, jedoch nicht um die Spindelwelle 3 rotierbar ist. Somit ist mittels des Rings 20 eine verdrehfeste Festlegung der Bundbuchsen 7a, 7b an der Spindelwelle 3 möglich. Die Nuten 9 erstrecken sich dabei parallel zur Mittellängsachse der Spindelwelle 3 über wenigstens eine Länge, die der maximalen linearen Verschiebbarkeit der Spindelwelle 3 gegenüber dem Gehäuse 2 entspricht.

Zur Verbesserung der Montierbarkeit des Rings 20 an der Spindelwelle 3 und dabei insbesondere der Nasen 8 in den Nuten 9 ist der Ring aus zwei gleichgroßen, jeweils 180° des Umfangs der Spindelwelle 3 umgebenden Teilen 21, 22 gebildet, die aneinander form- und kraftschlüssig festgelegt sind (siehe Fig. 3a).

Um eine Rotation der Spindelwelle 3, insbesondere des ersten Abschnitts 31, gegenüber dem Gehäuse 2 zu ermöglichen, weist die Lagereinheit 4 für jede der Bundbuchsen 7a, 7b ein Wälzlager 6a, 6b auf, wobei ein Innenring 62 des Wälzlagers 6a, 6b an der jeweiligen Bundbuchse 7a, 7b und ein Außenring 61 des Wälzlagers 6a, 6b an dem Gehäuse 2 angeordnet ist (siehe Fig. 3b). Zwischen dem Außenring 61 und dem Innenring 62 des Wälzlagers 6a, 6b sind Lagerkugeln 63 angeordnet. Dabei ist das Wälzlager 6a, 6b derart gebildet, dass darin lediglich eine Rotation der Bundbuchsen 7a, 7b gemeinsam mit der Spindelwelle 3 um die Mittellängsachse möglich ist, jedoch keine Verschiebung entlang der Mittellängsachse.

Die Lagereinheit 4 ist in einer Bohrung 10 im Gehäuse 2, insbesondere an einer auf den Verschließerkopf 11 zugewandten Seite des Gehäuses 2, formschlüssig festgelegt, wobei die Lagereinheit 4 und dabei insbesondere die Wälzlager 6a, 6b gegen ein Herausrutschen aus der Bohrung 10 mittels einem im Bereich der Öffnung mit dem Gehäuse 2 verschraubten Verschlussring 12 gesichert ist (siehe Fig. 2).

Insgesamt bezieht sich die erfindungsgemäße Lagerung des unteren Spindelwellen Abschnittes (dreh- und längsbeweglich) auf eine Kombination aus Gleitlagern und Rotationslagern sowie deren Anordnung und Befestigungsprinzip, die eine sehr verschleißarme und robuste Konstruktion darstellen.

### Bezugszeichenliste

- 1: Spindelwelleneinheit
- 2: Gehäusebauteil
- 3: Spindelwelle
- 31: erster Abschnitt der Spindelwelle
- 32: zweiter Abschnitt der Spindelwelle
- 4: Lagereinheit
- 5, 5a, 5b: Gleitlager
- 6, 6a, 6b: weitere Lager
- 61: Außenring
- 62: Innenring
- 63: Kugel
- 7, 7a, 7b: Gleitbuchsen
- 8: Seitenführung
- 9: Seitenführungselement
- 10: Bohrung
- 11: Verschließerkopf
- 12: Verschlussring
- 13: Zahnrad
- 14: Öffnung
- 15: zweites Gleitlager
- 16: Spindelwellenführung
- 17: Spindelwellenlager
- 18: Laufrad
- 19: Gleitbuchsenbund
- 20: Ring
- 21: erster Teil des Rings
- 22: zweiter Teil des Rings

## Patentansprüche

1. Spindelwelleneinheit (1) für eine Vorrichtung zum Drehverschließen von Behältern mit einem Schraubverschluss, mit einem ein- oder mehrteiligen Gehäusebauteil (2) und einer an dem Gehäusebauteil (2) drehbar und verschieblich angeordneten Spindelwelle (3), wobei zwischen dem Gehäusebauteil (2) und der Spindelwelle (3) eine Lagereinheit (4) angeordnet ist, wobei die Lagereinheit (4) ein mit der Spindelwelle (3) zusammenwirkendes Gleitlager (5) sowie ein mit dem Gleitlager (5) zusammenwirkendes weiteres Lager (6) umfasst, wobei die Spindelwelle (3) verschieblich und unverdrehbar am Gleitlager (5) angeordnet ist und das Gleitlager (5) gegenüber dem Gehäusebauteil (2) verdrehbar und unverschieblich mittels des weiteren Lagers (6) festgelegt ist,
**dadurch gekennzeichnet, dass**
das Gleitlager (5) eine Gleitbuchse (7) umfasst und an der Gleitbuchse (7) ein Ring (20) mit wenigstens einer Seitenführung (8) zur verdrehfesten Festlegung der Gleitbuchse (7) gegenüber der Spindelwelle (3) festgelegt ist, wobei die Seitenführung mit einem korrespondierenden Seitenführungselement (9) der Spindelwelle (3) zusammenwirkt, wobei der Ring (20) aus zwei, die Spindelwelle (3) umgebenden Teilen (21, 22) gebildet ist, die aneinander festlegbar sind und einen über den gesamten Umfang geschlossenen Ring (20) bilden.

2. Spindelwelleneinheit nach Anspruch 1, **dadurch gekennzeichnet, dass** die Gleitbuchse (7) als eine Bundbuchse gebildet ist.

3. Spindelwelleneinheit nach Anspruch 1 oder 2, **dadurch gekennzeichnet, dass** die Seitenführung (8) als eine Nut oder eine Nase und das korrespondierende Seitenführungselement (9) als eine Nase oder eine Nut gebildet ist.

4. Spindelwelleneinheit nach wenigstens einem der vorhergehenden Ansprüche, **dadurch gekennzeichnet, dass** an der Spindelwelle (3) zwei Seitenführungselemente (9), insbesondere Nasen oder Nuten, sich gegenüberliegend angeordnet sind und der Ring (20) zwei korrespondierende Seitenführungen (8), insbesondere Nuten oder Nasen, aufweist.

5. Spindelwelleneinheit nach wenigstens einem der vorhergehenden Ansprüche, **dadurch gekennzeichnet, dass** die beiden Teile (21, 22) den Ring (20) jeweils zum halben Umfang umgeben, wobei beide Teile (21, 22) formschlüssig und/oder kraftschlüssig aneinander festlegbar sind.

6. Spindelwelleneinheit nach wenigstens einem der vorhergehenden Ansprüche, **dadurch gekennzeichnet, dass** die Gleitbuchse (7) mittels eines Kugel- oder Wälzlagers (6) verdrehbar an dem Gehäusebauteil (2) angeordnet ist, wobei das Kugel- oder Wälzlager (6) mit einem Außenring (61) an dem Gehäusebauteil (2) und mit einem Innenring (62) an der Gleitbuchse (7) anliegt.

7. Spindelwelleneinheit nach wenigstens einem der vorhergehenden Ansprüche, **dadurch gekennzeichnet, dass** das Gleitlager (5) aus zwei übereinander angeordneten Gleitbuchsen (7a, b) gebildet ist, die bevorzugt gemeinsam über den Ring (20) miteinander verbunden sind.

8. Spindelwelleneinheit nach wenigstens einem der vorhergehenden Ansprüche, **dadurch gekennzeichnet, dass** das wenigstens ein Lager (6, 6a, b) in einer Bohrung (10) des Gehäusebauteils (2) angeordnet ist, wobei die Bohrung (10) bevorzugt in der Richtung zur Anordnung eines Verschließerkopfes (11) an der Spindelwelle (3) mittels eines Verschlussrings (12) geschlossen ist.

9. Vorrichtung zum Drehverschließen von Behältern mit einem Schraubverschluss, mit wenigstens einer Spindelwelleneinheit (1) nach einem der Ansprüche 1 - 8, wobei bevorzugt mehrere Spindelwelleneinheiten (1) hintereinander über das jeweilige Gehäusebauteil (2) an einem rotierenden Karussell angeordnet sind.

10. Vorrichtung zum Drehverschließen nach Anspruch 9, **dadurch gekennzeichnet, dass** an der Spindelwelle (3) ein Verschließerkopf (11) zum Fassen und Schließen eines Schraubverschlusses auf einem Behälter angeordnet ist, der mittels der Spindelwelle (3) rotierbar und in Axialrichtung verschieblich ist.

11. Vorrichtung zum Drehverschließen nach Anspruch 9 oder 10, **dadurch gekennzeichnet, dass** an der Spindelwelle (3) ein Zahnrad (13) zum Rotationsantrieb der Spindelwelle (3) festgelegt ist, das zumindest abschnittsweise aus dem Gehäusebauteil (2) herausragt und/oder durch eine Öffnung (14) des Gehäusebauteils (2) zugänglich ist.

12. Vorrichtung zum Drehverschließen nach wenigstens einem der Ansprüche 9 - 11, **dadurch gekennzeichnet, dass** an der Spindelwelle (3) ein zweites Gleitlager (15) angeordnet ist und die Spindelwelle (3) bevorzugt aus zwei aneinander angeordneten Abschnitten (31, 32) gebildet ist, wobei der erste Abschnitt (31) zur Anordnung an einem Verschließerkopf (11) vorgesehen ist und mit dem ersten Gleitlager (5) zusammenwirkt und der zweite Abschnitt (32) mit dem zweiten Gleitlager (15) zusammenwirkt und wobei bevorzugt am zweiten Abschnitt (32) eine Spindelwellenführung (16) zur Steuerung der Verschiebung der Spindelwelle (3) angeordnet ist.

13. Vorrichtung zum Drehverschließen nach wenigstens einem der Ansprüche 9 - 12, **dadurch gekennzeichnet, dass** beide Abschnitte (31,32) der Spindelwelle (3) durch ein zwischen dem zweiten Gleitlager (15) und dem Zahnrad (13) angeordnetes Spindelwellenlager (17), das bevorzugt als Kugel- oder Wälzlager gebildet ist, miteinander verbunden sind.

14. Vorrichtung zum Drehverschließen nach wenigstens einem der Ansprüche 9 - 13, **dadurch gekennzeichnet, dass** an dem mit dem zweiten Gleitlager (15) zusammenwirkenden zweiten Abschnitt (32) der Spindelwelle (3) ein Laufrad (18) zum Abrollen auf einer Steuerkurve zur Steuerung des Hubes der Spindelwelle (3) angeordnet ist, wobei das Laufrad (18) Teil der Spindelwellenführung (16) ist.

## Claims

1. Spindle shaft unit (1) for a device for the rotary closing of containers with a screw closure, having a one-part or multi-part housing component (2) and a spindle shaft (3) arranged so as to be able to rotate and be displaced on the housing component (2), wherein a bearing unit (4) is arranged between the housing component (2) and the spindle shaft (3), wherein the bearing unit (4) comprises a sliding bearing which interacts with the spindle shaft (3) as well as a further bearing (6) interacting with the sliding bearing (5), wherein the spindle shaft (3) is arranged on the sliding bearing (5) such that it can be displaced and is rotationally fixed in relation to the housing component (2) by means of the further bearing (6),
**characterised in that**
the sliding bearing (5) comprises a sliding sleeve (7), and a ring (20) is fixed to the sliding sleeve (7) with at least one lateral guide (8) for the non-rotatable fixing of the sliding sleeve (7) in relation to the spindle shaft (3),
wherein the lateral guide interacts with a corresponding lateral guide element (9) of the spindle shaft (3), wherein the ring (20) is formed from two parts (21, 22) surrounding the spindle shaft (3), which can be secured to one another and form a ring (20) which is closed over the entire circumference.

2. Spindle shaft unit according to claim 1, **characterised in that** the sliding sleeve (7) is formed from a composite sleeve.

3. Spindle shaft unit according to claim 1 or 2, **characterised in that** the lateral guide (8) is formed as a groove or a nose, and the corresponding lateral guide element (9) is formed as a nose or a groove.

4. Spindle shaft unit according to at least one of the preceding claims, **characterised in that** two lateral guide elements (9) are arranged at the spindle shaft (3), in particular noses or grooves, are arranged opposite one another, and the ring (20) comprises two corresponding lateral guides (8), in particular grooves or noses.

5. Spindle shaft unit according to at least one of the preceding claims, **characterised in that** the two parts (21, 22) each surround over half the circumference of the ring (20), wherein both parts (21, 22) can be secured to one another in a positive fit and/or non-positive fit.

6. Spindle shaft unit according to at least one of the preceding claims, **characterised in that** the sliding sleeve (7) is arranged on the housing component (2) such as to be rotatable by means of a ball bearing or roller bearing (6), wherein the ball bearing or roller bearing (6) is in contact with an outer ring (61) on the housing component (2) and with an inner ring (62) on the sliding sleeve (7).

7. Spindle shaft unit according to at least one of the preceding claims, **characterised in that** the sliding bearing (5) is formed from two sliding sleeves (7a, b) arranged above one another, which are preferably connected to one another in common by means of the ring (20).

8. Spindle shaft unit according to at least one of the preceding claims, **characterised in that** the at least one bearing (6, 6a, b) is arranged in a bore hole (10) of the housing component (2), wherein the bore hole (10) is preferably closed by means of a closure ring (12) in the direction towards the arrangement of a closure head (11) on the spindle shaft (3).

9. Device for the rotary closing of containers with a screw closure, with at least one spindle shaft unit (1) according to any one of claims 1-8, wherein preferably several spindle shaft units (1) are arranged behind one another on a rotating carousel over the respective housing component (2).

10. Device for rotary closing according to claim 9, **characterised in that** a closure head (11) is arranged on the spindle shaft (3), for securing and closing a screw closure on a container, which can be rotated by means of the spindle shaft (3) and displaced in the axial direction.

11. Device for rotary closing according to claim 9 or 10, **characterised in that** a toothed wheel (13) is secured to the spindle shaft (3) for the rotational drive of the spindle shaft (3), which at least in part projects out of the housing component (2) and/or is accessible through an opening (14) of the housing component (2).

12. Device for rotary closing according to at least one of claims 9-11, **characterised in that** a second sliding bearing (15) is arranged on the spindle shaft (3), and the spindle shaft (3) is preferably formed from two sections (31, 32) arranged next to one another, wherein the first section (31) is provided for arrangement on a closure head (11) and interacts with the first sliding bearing (5), and the second section (32) interacts with the second sliding bearing (15), and wherein preferably a spindle shaft guide (16) is preferably arranged at the second section (32) in order to control the displacement of the spindle shaft (3).

13. Device for rotary closing according to at least one of claims 9-12, **characterised in that** the two sections (31, 32) of the spindle shaft (3) are connected to one another by a spindle shaft bearing (17) arranged between the second sliding bearing (15) and the toothed wheel (13), which is preferably formed as a ball bearing or rolling bearing.

14. Device for rotary closing according to at least one of claims 9-13, **characterised in that** a wheel (18) is arranged at the second section (32) of the spindle shaft (3), interacting with the second sliding bearing (15), for rolling on a control curve such as to control the raising movement of the spindle shaft (3), wherein the wheel (18) is a part of the spindle shaft guide (16).

## Revendications

1. Ensemble arbre de broche (1) pour un dispositif de fermeture rotative de récipients avec une fermeture à vis, avec un élément boîtier (2) en une ou plusieurs parties et un arbre de broche (3) disposé de manière rotative et déplaçable sur l'élément boîtier (2), dans lequel un ensemble palier (4) est disposé entre l'élément boîtier (2) et l'arbre de broche (3), dans lequel l'ensemble palier (4) comprend un palier lisse (5) coopérant avec l'arbre de broche (3) ainsi qu'un autre palier (6) coopérant avec le palier lisse (5), dans lequel l'arbre de broche (3) est disposé de manière déplaçable et non rotative sur le palier lisse (5) et le palier lisse (5) est fixé de manière rotative et non déplaçable par rapport à l'élément boîtier (2) au moyen de l'autre palier (6),
**caractérisé en ce que**
le palier lisse (5) comprend une douille de glissement (7) et une bague (20) est fixée sur la douille de glissement (7) avec au moins un guidage latéral (8) pour la fixation solidaire en rotation de la douille de glissement (7) par rapport à l'arbre de broche (3),
dans lequel le guidage latéral coopère avec un élément de guidage latéral (9) correspondant de l'arbre de broche (3), dans lequel la bague (20) est formée de deux parties (21, 22) entourant l'arbre de broche (3), qui peuvent être fixées l'une sur l'autre et forment une bague (20) fermée sur toute la périphérie.

2. Ensemble arbre de broche selon la revendication 1, **caractérisé en ce que** la douille de glissement (7) est formée en tant que douille à collerette.

3. Ensemble arbre de broche selon la revendication 1 ou 2, **caractérisé en ce que** le guidage latéral (8) est formé en tant que rainure ou ergot et l'élément de guidage latéral (9) correspondant est formé en tant qu'ergot ou rainure.

4. Ensemble arbre de broche selon au moins l'une des revendications précédentes, **caractérisé en ce que** deux éléments de guidage latéral (9), en particulier des ergots ou rainures, sont disposés à l'opposé sur l'arbre de broche (3) et la bague (20) présente deux éléments de guidage latéral (8) correspondants, en particulier des rainures ou ergots.

5. Ensemble arbre de broche selon au moins l'une des revendications précédentes, **caractérisé en ce que** les deux parties (21, 22) entourent la bague (20) respectivement sur la demi-circonférence, dans lequel les deux parties (21, 22) peuvent être fixées l'une sur l'autre par coopération de formes et/ou à force.

6. Ensemble arbre de broche selon au moins l'une des revendications précédentes, **caractérisé en ce que** la douille de glissement (7) est disposée de manière rotative sur l'élément boîtier (2) au moyen d'un roulement à billes ou palier à roulement (6), dans lequel le roulement à billes ou palier à roulement (6) s'applique avec une bague extérieure (61) contre l'élément boîtier (2) et avec une bague intérieure (62) contre la douille de glissement (7).

7. Ensemble arbre de broche selon au moins l'une des revendications précédentes, **caractérisé en ce que** le palier lisse (5) est formé de deux douilles de glissement (7a, b) superposées, qui sont reliées l'une à l'autre de préférence conjointement par l'intermédiaire de la bague (20).

8. Ensemble arbre de broche selon au moins l'une des revendications précédentes, **caractérisé en ce que** le au moins un palier (6, 6a, b) est disposé dans un trou (10) de l'élément boîtier (2), dans lequel le trou (10) est fermé de préférence dans la direction pour la disposition d'une tête de fermeture (11) sur l'arbre de broche (3) au moyen d'une bague de fermeture (12).

9. Dispositif pour la fermeture rotative de récipients avec une fermeture à vis, avec au moins un ensemble arbre de broche (1) selon l'une quelconque des revendications 1-8, dans lequel de préférence plusieurs ensembles arbre de broche (1) sont disposés les uns derrière les autres sur un carrousel rotatif au-dessus de l'élément boîtier (2) respectif.

10. Dispositif pour la fermeture rotative selon la revendication 9, **caractérisé en ce qu'**une tête de fermeture (11) pour la préhension et la fermeture d'une fermeture à vis sur un récipient, qui est déplaçable de manière rotative et dans la direction axiale au moyen de l'arbre de broche (3), est disposée sur l'arbre de broche (3).

11. Dispositif pour la fermeture rotative selon la revendication 9 ou 10, **caractérisé en ce qu'**une roue dentée (13) pour l'entraînement en rotation de l'arbre de broche (3), qui fait saillie au moins sur certaines sections de l'élément boîtier (2) et/ou est accessible par une ouverture (14) de l'élément boîtier (2), est fixée sur l'arbre de broche (3).

12. Dispositif pour la fermeture rotative selon au moins l'une des revendications 9-11, **caractérisé en ce qu'**un deuxième palier lisse (15) est disposé sur l'arbre de broche (3) et l'arbre de broche (3) est formé de préférence de deux sections (31, 32) disposées l'une contre l'autre, dans lequel la première section (31) est prévue pour être disposée sur une tête de fermeture (11) et coopère avec le premier palier lisse (5) et la deuxième section (32) coopère avec le deuxième palier lisse (15) et dans lequel un guide d'arbre de broche (16) pour la commande du déplacement de l'arbre de broche (3) est disposé de préférence sur la deuxième section (32).

13. Dispositif pour la fermeture rotative selon au moins l'une des revendications 9-12, **caractérisé en ce que** les deux sections (31, 32) de l'arbre de broche (3) sont reliées l'une à l'autre par un palier d'arbre de broche (17) disposé entre le deuxième palier lisse (15) et la roue dentée (13), qui est formé de préférence en tant que roulement à billes ou palier à roulement.

14. Dispositif pour la fermeture rotative selon au moins l'une des revendications 9-13, **caractérisé en ce qu'**une roue de roulement (18) pour rouler sur une came de commande pour la commande de la course de l'arbre de broche (3) est disposée sur la deuxième section (32) de l'arbre de broche (3) coopérant avec le deuxième palier lisse (15), dans lequel la roue de roulement (18) fait partie du guide d'arbre de broche (16).
